# EUROPEAN PATENT SPECIFICATION

(11) **EP 0 662 451 B1**
(45) Date of publication and mention of the grant of the patent: **28.07.1999**
(21) Application number: 94300116.4
(22) Date of filing: 07.01.1994
(51) Int. Cl.: C01F 7/47

(54) **A process for crystallising out impurities from Bayer process liquors**
Verfahren zur Entfernung durch Kristallisation von Verunreinigungen aus Bayerprozesslaugen
Procédé d'élimination d'impuretés par crystallisation des liquides du procédé Bayer

(43) Date of publication of application: 12.07.1995
(73) Proprietor: ALCAN INTERNATIONAL LIMITED, Montreal Quebec H3A 3G2 (CA)
(72) Inventor: Moretto, Kenneth Edward, Castletroy, Limerick (IE)
(74) Representative: Wise, Stephen James

(56) References cited:
- EP-A- 0 345 654
- WO-A-92/19537
- BE-A- 655 911
- FR-A- 2 317 226
- DATABASE WPI Week 44, Derwent Publications Ltd., London, GB; AN 79-80467 TOKAREV ET AL. 'Soda removal from aluminate solution of aluminium manufacture.' & SU-A-647 252 (ALUMINIUM ELECTRODE)

## Description

The present invention relates to a process for the removal by crystallisation of crystallisable impurities from the liquors produced during the production of alumina from bauxite using the Bayer process. These liquors are referred to herein as "Bayer process liquors".

More particularly the present invention relates to the modification of the crystal growth of the solids, commonly called salt cake, precipitated from deeply evaporated Bayer spent liquors as part of an impurities removal system. These impurities generally consist of at least one sodium salt of at least one inorganic or organic compound, particularly, but not exclusively, sodium carbonate and/or sodium sulphate and/or another sodium salt along with sodium oxalate and/or at least one of its precursors, which are derived from the caustic decomposition either of the organic materials present in bauxite ore or of at least one polymer or flocculant which is added to the process liquors. By "deeply evaporated" is meant the evaporation of a substantial proportion of the water originally present thereby raising the caustic concentration in the residual solution to a relatively high level.

In typical salt cake removal plants, there are conditions of caustic concentration, temperature or holding time in which the impurities crystallise out in a barely separable form called "gel" and this results in a considerable reduction in the efficiency of the impurities removal system until conditions are adjusted to restore the separability of the salt cake. The present invention is based on the discovery that the addition of a synthetic flocculant prior to the crystallising out of the impurities and without the addition of steam delays or prevents the onset of this "gel" so that the performance of salt cake removal plant is greatly improved.

Yamada et al in US-A-4,280,987 describe the Bayer process for the extraction of alumina from bauxite and explain both the origin of the crystallisable impurities in Bayer process liquor and the conventional processes used to remove them.

Tokarev et al in SU-A-647,252 disclose that the crystallisable impurities can be separated from the liquor by evaporation to a final caustic concentration of 200 to 300 g/l of Na₂O which is equivalent to 342 to 513 g/l of Na₂CO₃. Tokarev et al emphasise that their claimed beneficial effect is obtained only when there is the combination of the introduction of a polyacrylamide as a flocculating agent into the solutions and the addition of steam with subsequent re-concentration by flashing. The addition of steam during the heating step with the consequential dilution of the liquor appears to be a significant part of the Russian process. The steam dilution is used for the partial redissolution of the finer fractions of the crystallised solids to coarsen them. The addition of steam during the heating step is an expensive complication of the process, both capital and operating costs being increased thereby. This disclosure teaches away from the present invention, in which there is no dilution with steam during the heating step.

Keeney et al in GB-A-2,211,832 disclose that spherulitic sodium oxalate is precipitated from a solution by evaporating a sodium oxalate-rich solution containing a substance that causes the sodium oxalate to crystallize in a spherulitic morphology. The morphology-changing substance is disclosed to be a surface active substance such as polyacrylate and polyacrylamide polymers. The precipitate is obtained when the TA (Total Alkali or caustic) is greater than 100 g/l (which Keeney expresses as Na₂CO₃ equivalent), but this level of concentration is much lower than the 350 to 600 g/l of Na₂CO₃ required in accordance with the present invention. Furthermore, Keeney et al do not contemplate the addition of the surface active substance prior to "deep" evaporation in accordance with one aspect of the present invention. The highest concentration of caustic specifically mentioned in GB-A-2,211,832 is 198 g/l in Example III, which is well below the minimum concentration required by the present invention.

Roe et al in US-A-4,608,237 disclose that the addition of a high molecular weight polymer to Bayer process liquors prior to the precipitation of Al₂O₃ changes the nature of the sodium oxalate that normally tends to precipitate out at the same time. It is disclosed that, in the presence of these polymers, the oxalate precipitates in large clusters which are innocuous with respect to the co-precipitation of alumina. It is taught that the polymers are added either to pregnant Bayer process liquors prior to seeding with finely divided alumina trihydrate, or to spent Bayer process liquors. The addition of synthetic flocculants to spent liquor prior to their evaporation are not contemplated by Roe et al.

Matyasi et al in "Light Metals" 1986 Vol. 2 pages 1057 to 1071 disclose that the solubility of impurities in Bayer process liquors is decreased by increasing the Na₂O content such that upon evaporating the liquors to a Na₂O concentration between 200 and 220 g/l (equivalent to 342 to 376 g/l of Na₂CO₃), the impurities will precipitate from the liquor, from which they can be removed by filtration. There is no disclosure in this document about the beneficial effect of adding a synthetic flocculant during the evaporation step.

Brown in AU-A-35943/89 discloses that the precipitation of sodium oxalate (one of the most important of the crystallisable impurities) can be enhanced - and the precipitation of alumina suppressed - by adding a suitable organic polymer to the solution. It is also disclosed that the addition of sodium polyacrylate hinders the nucleation of sodium oxalate by solid aluminium hydroxide. This last disclosure teaches that synthetic flocculants depress the crystallization of sodium oxalate in partially evaporated solutions of Bayer process liquors containing 130 to 156 g/l of Na₂O (equivalent to 222 to 267 g/l of Na₂CO₃). This teaches away from finding of the present invention that synthetic flocculants aid in the precipitation of crystallisable materials in evaporated solutions containing from 350 to 600 g/l of Na₂CO₃.

In accordance with the present invention there is provided a process for the removal of crystallisable impurities from a Bayer process liquor which comprises evaporating in the absence of the simultaneous addition of steam some of the water present in the liquor until the concentration of sodium hydroxide therein is equivalent to from 350 to 600 g/l expressed as Na₂CO₃, and holding the evaporated liquor at a temperature and for a time sufficient to allow a significant proportion of the crystallisable impurities to crystallise out, wherein there is added prior to, during or after the evaporation step an amount of a synthetic flocculant sufficient to assist in the crystallising morphology of at least some of the crystallisable impurities in the liquor.

In a preferred embodiment the present invention provides an improvement in the known crystallization/evaporation process to separate a precipitate of at least one sodium salt of at least one inorganic or organic compound from Bayer process liquors, which improvement comprises the addition of from 1 to 200 ppm of a synthetic flocculant such as a polyacrylate or a polyacrylamide to the liquor; evaporating without the simultaneous addition of steam until the concentration of sodium hydroxide, expressed as equivalent Na₂CO₃ has increased to from 350 to 600 g/l; holding the evaporated liquor for from 10 minutes to 10 hours at from 20 to 95^{º}C to form an easily filterable salt cake of the sodium salts of the crystallisable impurities, mainly a mixed precipitate of sodium sulphate, sodium carbonate and sodium oxalate, originally present in the liquor; and optionally adding up to 100 g/l of seed crystals at the beginning of the holding period; and separating the precipitate of salt cake from the liquor.

The solids that precipitate from deeply evaporated Bayer liquors tend to have an easily filterable ball shape with the presence of some needles at low caustic concentrations, high precipitation temperatures and short holding times. However, these conditions do not give high salt cake yields. Stressing these variables by raising the caustic concentration, lowering the temperature or increasing the holding time increases the salt cake removal yield but causes a poorly separable "gel". This "gel" material has not been identified but is considered to be a mixed precipitate predominantly of sodium carbonate and/or sodium oxalate in the form of amorphous, long needle-like shapes as opposed to a more easily separable reasonably well-defined ball shape.

The addition of a synthetic flocculant in accordance with the present invention is believed to delay or prevent this "gel" formation by either tending to raise the stability of the liquor so that higher supersaturations are achieved - which favour ball formation - or by acting as an agglomerating aid to agglomerate the solid particles that would otherwise tend to form a "gel" and to form them into a ball on which additional solids can grow, or possibly a combination of both. The flocculant can be added prior to, during, or after the evaporation step. In factory practice, however, the addition point is preferably before the evaporation step, because this can be done at low pressure with simple dosing equipment, whereas addition at later stages in the process would require the use of more expensive high pressure dosing equipment.

Any synthetic flocculant capable of operating under conditions of relatively high caustic concentration is suitable in the process of the present invention. Suitable examples are polyacrylate and polyacrylamide polymers including polyacrylate/polyacrylamide co-polymers, and co-polymers which include a substantial proportion of acrylate or acrylamide repeating units, as well as such polymers which contain in addition hydroxamic acid or hydroxamate functional groups. The flocculants can be in solid, liquid or emulsion form with from 0 to 100% anionic charge. The preferred products are 95 to 100% anionic charge copolymers of sodium or ammonium acrylamide and acrylate in the molecular weight range 1 to 18 million. These flocculants are sold under various Trade Names such as NALCO 7879, Floerger 1030SP4, Floerger 995SH, Betz 1128L, Betz CME 372, Betz 1100LBO and HXPAM 300.

Preferably the flocculant concentration in the Bayer process liquor prior to evaporation is from 20 to 40 ppm, and the concentration of sodium hydroxide in the flocculant/liquor mixture at the end of the evaporation step is from 400 to 460 g/l expressed as Na₂CO₃ equivalent. The preferred holding time for the evaporated mixture is from 1 to 4 hours at a preferred temperature of from 60 to 80^{º}C.

Preferably seeding crystals in an amount of up to 100 g/l, preferably from 2 to 8 g/l, are added to the evaporated flocculant/liquor mixture to assist crystallisation during the holding step, which crystals are preferably crystallised impurities which have previously been removed from a Bayer process liquor by the process of the present invention. Preferably the seeding crystals are substantially composed of sodium carbonate and sodium oxalate.

The described synthetic flocculant can also be used in a process according to the present invention to modify the crystal morphology of the crystallising impurities in those cases where a poorly separable mixed salt is precipitated from a Bayer process liquor that has been, for example, oxidized by electrolysis, wet air oxidation, ozone, hydrogen peroxide, MnO₂, or any other oxidising agent, or else from a Bayer process liquor that has been sub-cooled to a very low temperature.

Naturally occurring substances, such as sodium humates are excluded from the present application because:
(a) they are not deliberately added but are usually present in the process liquors (they are derived from the caustic attack of the humic matter in the bauxite and from the decomposition of the polymers added to the liquor); and
(b) it has been found that these materials do not prevent the formation of gels, nor do they give high yields of salt cake. It is postulated that they break down during the evaporation step to much lower molecular weight molecules that are ineffective in preventing the formation of gels; in contrast the synthetic flocculants used in the present invention still remain effective in preventing the formation of gels following the evaporation step.

The present invention will now be illustrated with reference to the following Examples which include a number of comparative Examples.

### EXAMPLES 1 to 22

A series of 22 laboratory experiments were carried out using spent Bayer process liquor from an industrial plant with and without the addition of a synthetic flocculant. The spent liquor was evaporated with various doses of the synthetic flocculant, and the filtration rates of the slurries produced thereby were determined and compared to the filtration rates achieved for control samples which were treated in exactly the same way except that no flocculant was added.

Different test conditions were used and for each the following standard procedure was followed:-

500 g of spent liquor were poured into each of two stainless steel two litre beakers which were then placed on magnetic stirrer/hot plates in a fume cupboard and heated.

To only one of the two liquor samples was the synthetic flocculant, diluted to a concentration of 1% by weight, added prior to, during or after the evaporation step. The spent liquor in both beakers was evaporated such that the remaining volume was that required to achieve the desired final caustic concentration, and then the two samples were transferred to respective half litre Nalgene plastic bottles each containing either nil, 1 or 2 g samples of Bayer plant salt cake of substantially identical composition and structure to act as a seeding material.

The bottles were sealed and placed in a rotating water bath at a controlled temperature for a sufficient time to crystallise out a substantial amount of the solids therein, which was found to be normally about 1 hour at 50 to 60^{º}C. After the required holding time, the bottles were removed from the water bath and their contents filtered using a stainless steel millipore filter with a column height of 300 mm and a diameter of 38 mm, using a section of a plant filter cloth as the filter medium.

Where possible, the filtration time for each 10 ml tranch was measured and when the filtration was complete the weight of the wet filter cake formed thereby was determined. During the filtration process, a steady vacuum of 450 mm Hg was maintained.

The wet filter cakes thus formed were retained for moisture analyses, and also to be used as the source material for the seeding material in a subsequent cycle of evaporation, crystallisation and filtration in replacement of the process salt cake which was added in the first cycle to the evaporated spent liquor in the bottles.

Using two new samples of the spent liquor the test procedure was repeated using the new seeding material, whereby generating a new set of test data and a new source of seeding material for the subsequent cycle.

Up to two test cycles were performed for each of the test conditions, and the results are presented in Tables 1a and 1b below.

For comparison purposes, the filtration rates were calculated for each test at the same filtered volume for each of the cycles and expressed as t(metric)/h/m² on a dry solids basis. In all cases, it can be seen from the Tables 1a and 1b that the filtration rates obtained with the samples containing the synthetic flocculants were significantly higher than for the equivalent samples without the synthetic flocculant. Taken overall the addition of the synthetic flocculant was found to increase the filtration rate of the samples in Table 1a by an average factor of approximately 10 compared to the control samples.

The synthetic flocculants used in these Examples and identified in Tables 1a and 1b are as follows:-
"Syn Floc # 1" - a high molecular weight, highly anionic ammonium polyacrylate in emulsion form in Examples 1 to 4 and Examples 15 to 18.
"Syn Floc # 2" - a high molecular weight (approximately 15 million), very highly anionic polymer of ammonium acrylate in emulsion form in Examples 5 to 8.
"Syn Floc # 3" - a high molecular weight (approximately 10 to 12 million), highly anionic acrylamide co-polymer in emulsion form in Examples 9 to 10.
"Syn Floc # 4" - a high molecular weight (approximately 12 million), moderately anionic acrylamide co-polymer in powder form in Examples 11 to 12.
"Syn Floc # 5" - a lower molecular weight (approximately 1 to 2 million), weakly anionic acrylamide co-polymer in liquid form in Examples 13 to 14.
"Syn Floc # 6" - a high molecular weight hydroxamated polyacrylate based polymer in emulsion form in Examples 19 to 22.

It was found that the synthetic flocculant can be added prior to, during or after evaporation as was done in Examples 19 to 21, respectively, and in all cases the filtration rate was better than the control Example 22 to which no flocculant was added.

Since the purpose of the synthetic flocculant addition is to promote ball, rather than needle morphology in the crystallising material, the amount of salt cake precipitated with the addition of a synthetic flocculant might have been expected to have been reduced compared with that achieved in the absence of a synthetic flocculant. This can be overcome in practice by "stressing" the variables which increase salt cake yield such as caustic concentration, crystallisation temperature and holding time. Examples 3 to 14 show that by evaporating the Bayer process liquor to a higher final caustic concentration and then allowing the evaporated liquor to age at a lower temperature for a longer time, there is no significant adverse effect on the amount of dry solids per unit volume of evaporated liquor achieved compared to the base conditions of 417 gpl caustic, 60^{º}C and 60 minutes holding time shown in Examples 1 and 2. Satisfactory filtration rates can still be maintained at these "stressed" conditions as shown in Examples 3 to 14 compared to the filtration rates for the control in Example 2.

Furthermore it can be seen from the results in Tables 1a and 1b that, in general, the level of moisture retained in the salt cake was lowered when using a synthetic flocculant compared to the control, and this is also beneficial as it results in a reduction in the loss of valuable soda components contained in the liquor phase.

### EXAMPLES 23 to 28

A further set of six laboratory experiments were carried out using spent Bayer process liquor from an industrial plant to determine whether the removal of, particularly, sodium oxalate could be enhanced by increasing the holding time of the mixture prior to separation of the crystallized solids, and whether dosing with a synthetic flocculant could improve the filtration rates of the resulting slurries.

Six samples were taken from the liquor after evaporation in the plant and were divided into two groups of three samples labelled A, B, and C. Both samples A were immediately filtered through a plant filter cloth, whilst both samples B were placed in a thermostatically controlled water bath at 65^{º}C and rotated end over at 11 rpm for 2.5 hours, whilst both samples C were placed in a convection oven at 65^{º}C and allowed to stand without agitation for 3 hours.

The filtration times for all six samples were determined for one litre of slurry passing through a plant filter cloth set in a funnel which was 100 mm in diameter and 80 mm in height under a vacuum of 380 mm Hg. This was done immediately for samples A, after 2.5 hours for samples B and after 3 hours for samples C. The separated solids were in each case dried and their mass determined, whilst the respective liquid phases were analysed for sodium oxalate and sodium sulphate by ion chromatography, and for sodium hydroxide (as sodium carbonate equivalent) and for sodium carbonate itself using an automatic analyser known as a "Titroprocessor".

For the first set of samples A, B and C (Examples 23, 24 and 25), the plant liquor from which the samples were drawn had been dosed prior to its evaporation with 20 ppm of a synthetic flocculant which was a high molecular weight, highly anionic ammonium polyacrylate in emulsion form, whereas the second set of samples (Examples 26, 27 and 28) were taken from evaporated plant liquor which had not been dosed with the flocculant.

The results of these six experiments are presented in Tables 2 and 3 below, from which it can be seen that filterability of the evaporated liquor was seriously inhibited when the caustic concentration was about 477 g/l and no synthetic flocculant was used. It can be further noted that there was no significant reduction in filterability even at relatively high caustic concentrations of around 491 g/ℓ when the flocculant was used.

The sodium oxalate production figures given in Tables 2 and 3 were calculated on the assumption of a 100 m³/h spent liquor feed with a caustic concentration of 210 g/l and a sodium oxalate concentration of 2.9 g/l. It can be seen from Tables 2 and 3 that increasing the holding time, whether agitated or unagitated, results in increased oxalate removal from the evaporated liquor, but that unless the liquor has been dosed with a synthetic flocculant the filtration rates after extended holding times are substantially reduced.

It will be noted that in none of the Examples according to the invention where a synthetic flocculant was used was steam added to the evaporating solution, and yet, contrary to the teaching of SU-A-647,252, an easily filterable salt cake was formed in each case. Steam can be used in the process of the present invention as a source of heat for the evaporation of the liquor, provided that it is not added to the liquor.

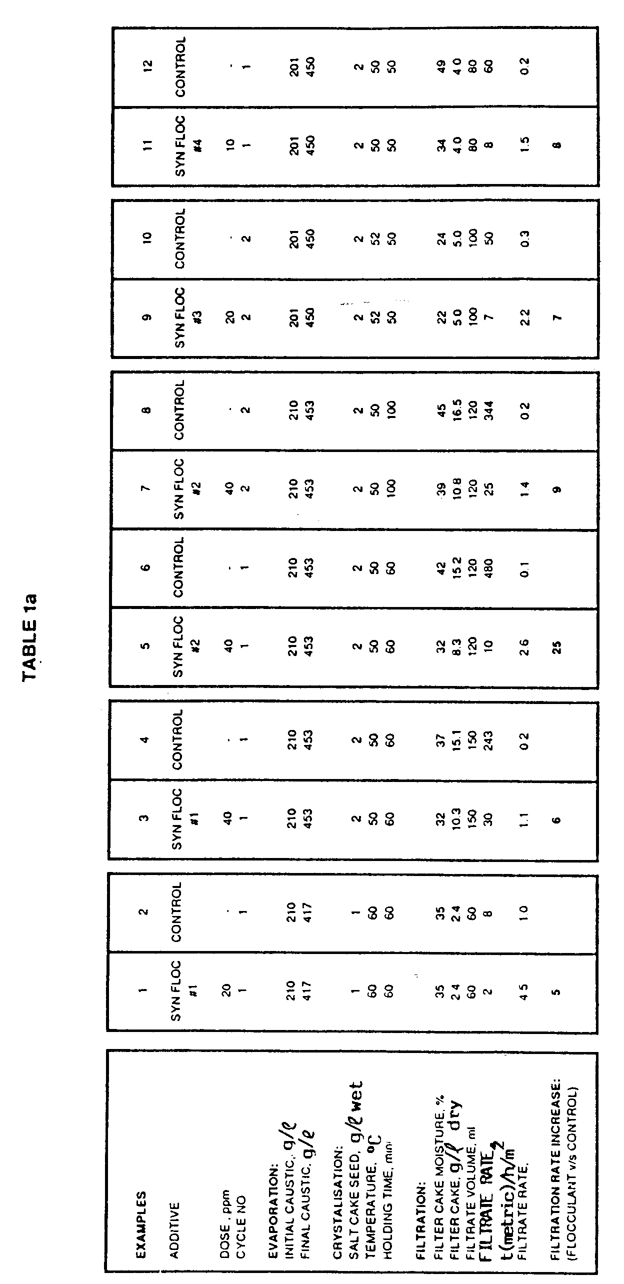

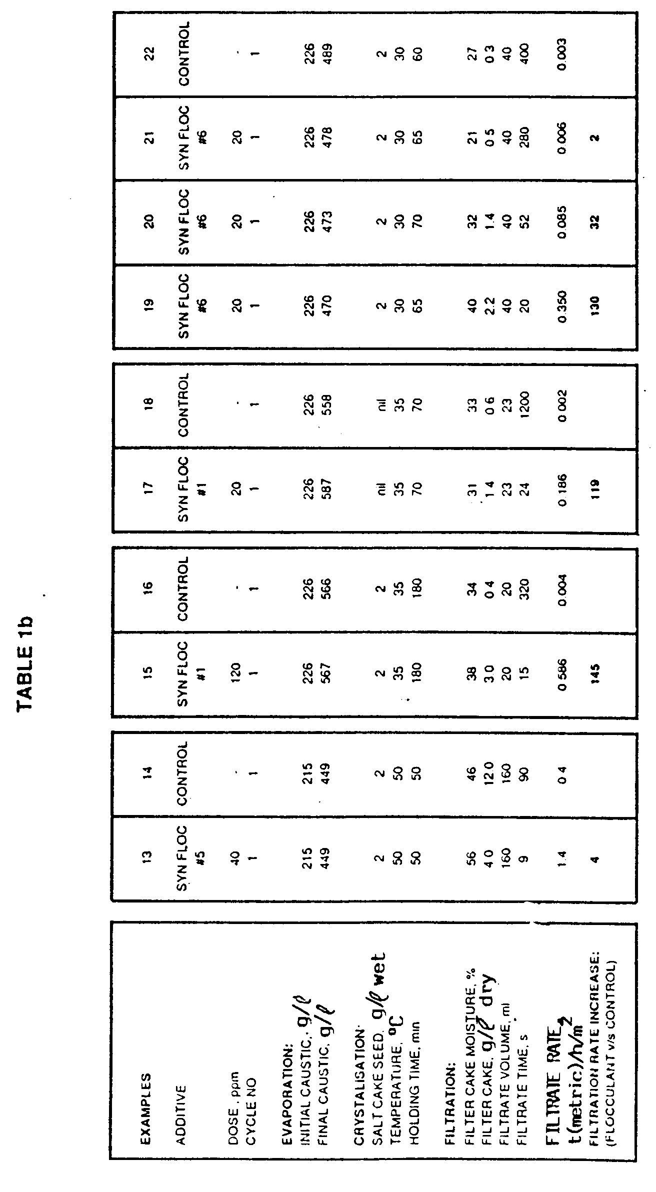

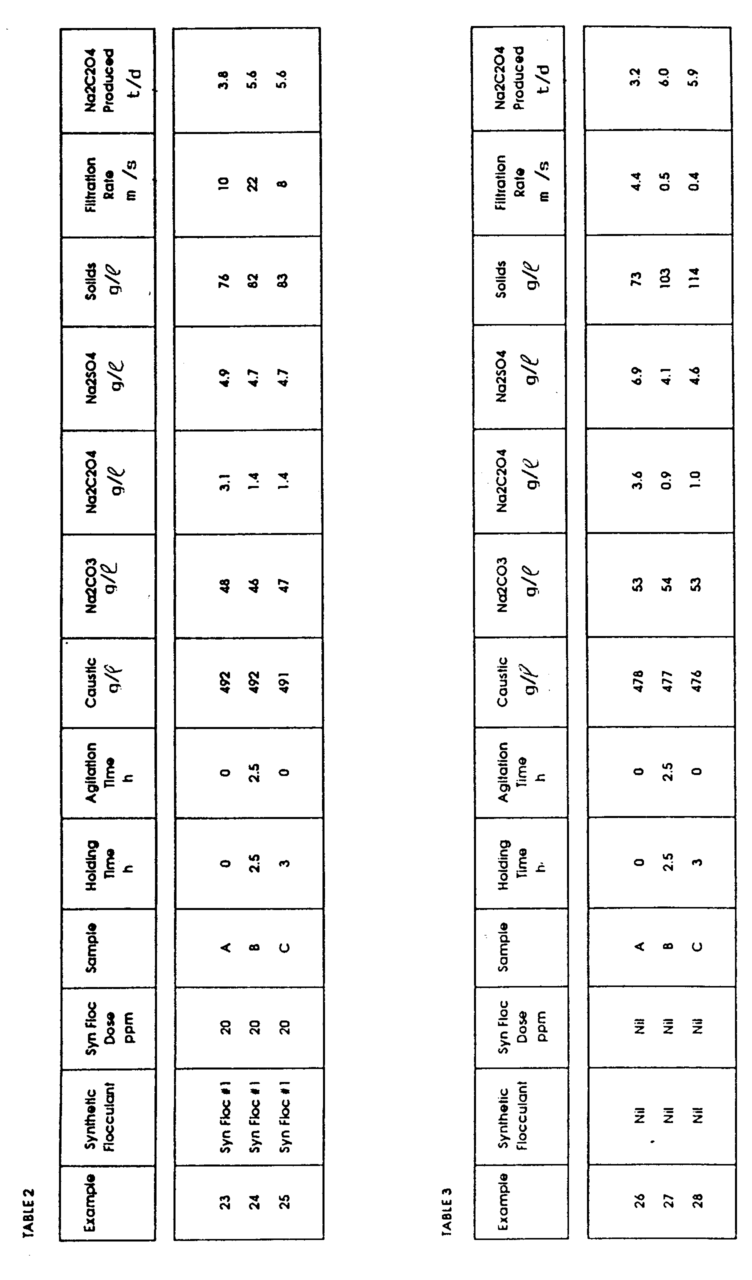

## Claims

1. A process for the removal of crystallisable impurities from a Bayer process liquor which comprises evaporating in the absence of the simultaneous addition of steam some of the water present in the liquor until the concentration of sodium hydroxide therein is equivalent to from 350 to 600 g/l expressed as Na₂CO₃, and holding the evaporated liquor at a temperature and for a time sufficient to allow a significant proportion of the crystallisable impurities to crystallise out, wherein there is added prior to, during or after the evaporation step an amount of a synthetic flocculant sufficient to assist in the crystallising out of at least some of the crystallisable impurities in the liquor.

2. A process as claimed in claim 1 wherein the flocculant is a polymer selected from the group consisting of a polyacrylate homopolymer, a polyacrylamide homopolymer, a polyacrylate/polyacrylamide copolymer, a copolymer which includes a substantial proportion of acrylate repeating units and a copolymer which includes a substantial proportion of acrylamide repeating units.

3. A process as claimed in claim 1 or claim 2 wherein the flocculant is a polymeric sodium or ammonium salt.

4. A process as claimed in any one of the preceding claims wherein the flocculant concentration in the liquor prior to, during or after evaporation is from 1 to 200 ppm.

5. A process as claimed in claim 4 wherein the flocculant concentration is from 20 to 40 ppm.

6. A process as claimed in any one of the preceding claims wherein the concentration of sodium hydroxide in the evaporated liquor is from 400 to 460 g/l expressed as Na₂CO₃ equivalent.

7. A process as claimed in any of the preceding claims wherein the evaporated liquor is held for from 10 minutes to 10 hours.

8. A process as claimed in claim 7 wherein the holding time is from 1 to 4 hours.

9. A process as claimed in any one of the preceding claims wherein the evaporated liquor is held at a temperature of from 20 to 95^{º}C.

10. A process as claimed in claim 9 wherein the holding temperature is from 60 to 80^{º}C.

11. A process as claimed in any one of the preceding claims wherein seeding crystals in an amount of up to 100 g/l are added to the evaporated liquor to assist crystallisation during the holding step.

12. A process as claimed in claim 11 wherein from 2 to 8 g/l of seeding crystals are added at the beginning of the holding step.

13. A process as claimed in claim 11 or claim 12 wherein the seeding crystals are crystallised impurities removed from a Bayer process liquor by a process as claimed in any one of the preceding claims.

14. A process as claimed in any one of claims 11 to 13 wherein the seeding crystals are substantially composed of sodium carbonate and sodium oxalate.

## Patentansprüche

1. Verfahren zur Entfernung von kristallisierbaren Verunreinigungen aus einer Bayerprozeßlauge, umfassend das Verdampfen in Abwesenheit der gleichzeitigen Zugabe von Dampf von etwas Wasser, das in der Lauge vorhanden ist, bis die Konzentration von Natriumhydroxid darin 350 bis 600 g/l, ausgedrückt in Na₂CO₃-Äquivalent, entspricht, und das Verweilen der verdampften Lauge bei einer Temperatur und eine Zeitdauer lang, die ausreichen, um einen deutlichen Anteil der kristallisierbaren Verunreinigungen durch Kristallisation zu entfernen, wobei vor, während oder nach dem Verdampfungsschritt eine Menge eines synthetischen Flockungsmittels hinzugefügt wird, das in der Lage ist, das Entfernen von zumindest einigen der kristallisierbaren Verunreinigungen in der Lauge durch Kristallisation zu fördern.

2. Verfahren nach Anspruch 1, wobei das Flockungsmittel ein Polymer ist, das aus der Gruppe ausgewählt ist, die ein Polyacrylsäureester-Homopolymerisat, ein Polyacrylamid-Homopolymerisat, ein Polyacrylsäureester-/Polyacrylamid-Kopolymerisat, ein Kopolymerisat, das einen wesentlichen Anteil von Acrylsäureester-Wiederholungseinheiten enthält, und ein Kopolymerisat, das einen wesentlichen Anteil von Acrylamid-Wiederholungseinheiten enthält, umfaßt.

3. Verfahren nach Anspruch 1 oder Anspruch 2, wobei das Flockungsmittel ein polymeres Natrium- oder Ammoniumsalz ist.

4. Verfahren nach irgendeinem der vorangegangen Ansprüche, wobei die Konzentration des Flockungsmittels in der Lauge vor, während oder nach dem Verdampfen 1 bis 200 ppm beträgt.

5. Verfahren nach Anspruch 4, wobei die Konzentration des Flockungsmittels 20 bis 40 ppm beträgt.

6. Verfahren nach irgendeinem der vorangegangenen Ansprüche, wobei die Konzentration des Natriumhydroxid in der verdampften Lauge 400 bis 460 g/l, ausgedrückt in Na₂CO₃-Äquivalent, beträgt.

7. Verfahren nach irgendeinem der vorangegangenen Ansprüche, wobei das Verweilen der verdampften Lauge 10 Minuten bis 10 Stunden beträgt.

8. Verfahren nach Anspruch 7, wobei die Verweildauer 1 bis 4 Stunden beträgt.

9. Verfahren nach irgendeinem der vorangegangenen Ansprüche, wobei die verdampfte Lauge bei einer Temperatur von 20 bis 95 °C verweilt.

10. Verfahren nach Anspruch 9, wobei die Verweiltemperatur 60 bis 80 °C beträgt.

11. Verfahren nach irgendeinem der vorangegangenen Ansprüche, wobei Kristallisationskeime in einer Menge von bis zu 100 g/l der verdampften Lauge hinzugefügt werden, um die Kristallisation während des Verweilschritts zu fördern.

12. Verfahren nach Anspruch 11, wobei 2 bis 8 g/l Kristallisationskeime zu Beginn des Verweilschritts hinzugefügt werden.

13. Verfahren nach Anspruch 11 oder Anspruch 12, wobei die Kristallisationskeime kristallisierte Verunreinigungen darstellen, die aus einer Bayerprozeßlauge in einem Verfahren nach irgendeinem der vorangegangenen Ansprüche entnommen worden sind.

14. Verfahren nach irgendeinem der Ansprüche 11 bis 13, wobei die Kristallisationskeime im wesentlichen aus Natriumkarbonat und Natriumoxalat zusammengesetzt sind.

## Revendications

1. Procédé d'élimination des impuretés cristallisables d'un liquide du procédé Bayer qui consiste à évaporer en l'absence de l'addition simultanée de vapeur une partie de l'eau présente dans le liquide jusqu'à ce que la concentration d'hydroxyde de sodium dans cette liqueur soit équivalente à une valeur allant de 350 à 600 g/l exprimés en Na₂CO₃, et maintenir le liquide évaporé à une température suffisante et pendant une durée suffisante pour permettre à une proportion importante des impuretés cristallisables d'être éliminée par cristallisation, dans lequel il est ajouté avant, pendant ou après l'étape d'évaporation une quantité d'agent de floculation synthétique suffisante pour aider à l'élimination par cristallisation d'une partie au moins des impuretés cristallisables dans le liquide.

2. Procédé selon la revendication 1, dans lequel l'agent de floculation est un polymère sélectionné dans le groupe constitué d'un homopolymère de polyacrylate, un homopolymère polyacrylamide, un copolymère de polyacrylate/polyacrylamide un copolymère qui inclut une proportion importante d'unités cycliques d'acrylate et un copolymère qui inclut une proportion importante d'unités cyclique d'acrylamide.

3. Procédé selon la revendication 1 ou la revendication 2, dans lequel l'agent de floculation est un sel polymérique de sodium ou d'ammonium.

4. Procédé selon l'une quelconque des revendications précédentes dans lequel la concentration en agent de floculation dans le liquide avant, pendant ou après évaporation se situe de 1 à 200 ppm.

5. Procédé selon la revendication 4 dans lequel la concentration en agent de floculation va de 20 à 40 ppm.

6. Procédé selon l'une quelconque des revendications précédentes dans lequel la concentration en hydroxyde de sodium dans le liquide évaporé se situe entre 400 et 460 g/l exprimés en équivalent de Na₂CO₃.

7. Procédé selon l'une quelconque des revendications précédentes dans lequel le liquide évaporé est maintenu au repos pendant une période de 10 minutes à 10 heures.

8. Procédé selon la revendication 7, dans lequel le temps de maintien au repos va de 1 à 4 heures.

9. Procédé selon l'une quelconque des revendications précédentes dans lequel le liquide évaporé est maintenu à une température allant de 20 à 95°C.

10. Procédé selon la revendication 9 dans lequel la température de maintien va de 0 à 80°C.

11. Procédé selon l'une quelconque des revendications précédentes dans lequel des germes cristallins dans une quantité allant jusqu'à 100 g/l sont ajoutés au liquide évaporé pour aider à une cristallisation pendant l'étape de maintien au repos.

12. Procédé selon la revendication 11 dans lequel de 2 à 8 g/l de germes cristallins sont ajoutés au début de l'étape de maintien au repos.

13. Procédé selon la revendication 11 ou la revendication 12, dans lequel les germes cristallins sont des impuretés cristallisées éliminées d'un liquide de procédé Bayer par un procédé selon l'une quelconque des revendications précédentes.

14. Procédé selon l'une quelconque des revendications 11 à 13, dans lequel les germes cristallins sont composés essentiellement de carbonate de sodium et d'oxalate de sodium.
